# EUROPEAN PATENT APPLICATION

(11) **EP 2 093 264 A2**
(43) Date of publication of application: **26.08.2009**
(21) Application number: 09250435.6
(22) Date of filing: 19.02.2009
(51) Int. Cl.: C09D 5/02, C09D 5/18, C09D 7/12, C08K 5/00

(54) **Coating composition for car interior material and car interior material**

(30) Priority: 21.02.2008 JP 2008039778
(71) Applicant: Nissin Chemical Industry Co., Ltd., Echizen-shi, Fukui-ken (JP)
(72) Inventor: Fukuzumi, Takeshi, Echizen-shi, Fukui-ken (JP); Shirazawa, Keiichi, Echizen-shi, Fukui-ken (JP); Uchida, Kouki, Echizen-shi, Fukui-ken (JP)
(74) Representative: Nash, David Allan

(57) **Abstract**

A novel coating composition comprising a non-halogen flame retardant for use with car interior materials such as car seats, car mats, and ceiling materials is provided. This coating composition has physical properties comparable to those of the coating agents comprising a conventional halogen flame retardant, and has solved the problems of insufficient heat resistance and warm water resistance associated with the ammonium polyphosphate having its surface treated with a functional group-containing organosilicon resin. A car interior material coated with this coating composition is also provided. The coating composition comprises a synthetic resin emulsion prepared by adding 1 to 300 parts by weight of at least one non-halogen flame retardant per 100 parts by weight of the solid content of the synthetic resin emulsion, wherein the non-halogen flame retardant comprises particles of a compound composed of a nitrogen-containing heterocycle compound and a phosphate coated on their surface with a functional group-containing organosilicon resin.

## Description

### TECHNICAL FIELD

This invention relates to a coating composition used as a coating agent for a car interior material such as car seat, car mat, or ceiling material. This invention also relates to a car interior material coated with such composition.

### BACKGROUND OF THE INVENTION

Most conventional coating agents applied to car interior materials such as car seats, car mats, and ceiling materials in the contained a halogenated flame retardant such as decabromodiphenyl ether for imparting flame retardancy. Recent concern for the environment demands replacement of the conventional halogenated flame retardants with non-halogen flame retardants. The non-halogen flame retardants, however, are inferior in flame retardancy and water resistance compared to the halogenated flame retardants.

To overcome these problems, attempts have been made to encapsulate a water-soluble non-halogen flame retardant such as ammonium polyphosphate by using a coating agent. JP-A 9-13037 discloses such a coating agent comprising a polyamide resin, acrylic resin, or styrene resin. The resulting flame retardant, however, had been insufficient in water resistance.

JP-A 10-110083 and JP-A 2003-171878 disclose that ammonium polyphosphate particles can be admixed with acrylic emulsions in a stable manner when their surface is coated with melamine resins or the like. While the emulsion compatibility is improved, water resistance of the coated surface after coating and drying the coating on the substrate, which is typically a fabric, is not improved if the coating agent has a low degree of curing. For example, a problem has been pointed out that the coating surface becomes slimy when brought in contact with water. On the other hand, if the coating agent has a higher degree of curing, the above problem may be overcome, but formaldehyde may become detectable, raising an environmental problem.

JP-A 2006-28488 proposes a coating composition for vehicle interior materials which attempts to improve the sliminess. This coating composition comprises a synthetic resin emulsion having added thereto particles of at least one type of non-halogen flame retardant containing phosphorus and nitrogen, which is typically ammonium polyphosphate. The surface of the particles is coated with a functional group-containing organosilicon resin, and at least one non-halogen flame retardant is added at an amount of 1 to 300 parts by weight per 100 parts by weight of the solid content of the synthetic resin emulsion. JP-A 2006-28488 also proposes a vehicle interior material having this composition coated thereon. This coating composition, however, has been insufficient in heat resistance and warm water resistance.

In addition to the ammonium polyphosphate, metal hydroxides such as is aluminum hydroxide and magnesium hydroxide and phosphate esters have been proposed for use as a non-halogen flame retardant. These agents, however, have been pointed out to have inferior flame retardancy compared to the halogenated flame retardants.

There exists a need for a coating composition for car interior materials comprising a non-halogen flame retardant having physical properties comparable to those of the coating agents comprising conventional halogenated flame retardants, which also has solved the problems associated with the ammonium polyphosphate.

### SUMMARY OF THE INVENTION

The present invention has been accomplished in view of the situation as described above, and an object of the present invention is to provide a coating composition for use with car interior materials such as car seats, car mats, and ceiling materials, comprising a non-halogen flame retardant which has physical properties comparable to those of the coating agents comprising a conventional halogen flame retardant, and which has solved the problems of heat resistance and warm water resistance associated with the ammonium polyphosphate having its surface treated with a functional group-containing organosilicon resin. Another object of the present invention is to provide a car interior material having this coating composition coated thereon.

The inventors of the present invention made an extensive study to realize the objects as described above, and found that a novel coating composition comprising a non-halogen flame retardant which has physical properties comparable to those of the coating agents comprising a conventional halogen flame retardant, and which has solved the problems of heat resistance and warm water resistance associated with the ammonium polyphosphate having its surface treated with a functional group-containing organosilicon resin can be provided by adding a predetermined amount of at least one non-halogen flame retardant comprising particles of a compound composed of a nitrogen-containing heterocycle compound and a phosphate coated on their surface with a functional group-containing organosilicon resin to a synthetic resin emulsion; and such coating composition is well adapted for use as a coating agent of car interior materials such as car seats, car mats, and ceiling materials.

Accordingly, the present invention provides the coating composition for car interior materials and the car interior material as described below.
[1] A coating composition for car interior materials comprising a synthetic resin emulsion prepared by adding 1 to 300 parts by weight of at least one non-halogen flame retardant to 100 parts by weight of the solid content of the synthetic resin emulsion, wherein the non-halogen flame retardant comprises particles of a compound composed of a nitrogen-containing heterocycle compound and a phosphate coated on their surface with a functional group-containing organosilicon resin.
[2] The coating composition for car interior materials according to the above [1] wherein the compound composed of a nitrogen-containing heterocycle compound and a phosphate is at least one member selected from the group consisting of melamine phosphate, melamine polyphosphate, melamine pyrophosphate, melam polyphosphate, and melem polyphosphate.
[3] The coating composition for car interior materials according to the above [1] or [2] wherein the synthetic resin emulsion is at least one member selected from the group consisting of (meth)acrylate resin emulsion, styrene-acrylate copolymer emulsion, urethane resin emulsion, ethylene-vinyl acetate copolymer emulsion, and rubber emulsion.
[4] The coating composition for car interior materials according to any one of the above [1] to [3] wherein the functional group-containing organosilicon resin is a resin obtained by reacting a siloxane oligomer with a functional group-containing organosilicon compound.
[5] The coating composition for car interior materials according to the above [4] wherein the siloxane oligomer is at least one partial hydrolytic condensate of an alkoxysilane represented by the following formula:

   RₙSi(OR')₄₋ₙ

   wherein R is an alkyl group containing 1 to 6 carbon atoms, R' is an alkyl group containing 1 to 4 carbon atoms, and n is an integer of 0 to 3, the siloxane oligomer having at least one alkoxy group in the molecule and containing 2 to 10 silicon atoms on average.
[6] The coating composition for car interior materials according to the above [5] wherein the alkoxysilane contains at least 50% by weight of a trialkoxysilane.
[7] The coating composition for car interior materials according to the above [5] wherein the siloxane oligomer is a siloxane oligomer containing 2 to 6 silicon atoms on average obtained by reacting an alkyltrialkoxysilane containing 1 to 6 carbon atoms with methanol or ethanol.
[8] The coating composition for car interior materials according to any one of the above [4] to [7] wherein the functional group-containing organosilicon compound is a functional group-containing alkoxysilane represented by the following formula:

   XₘRₖSi(O')₄₋ₘ₋ₖ

   wherein X is an alkyl group having a functional group selected from epoxy group, vinyl group, mercapto group, and amino group, R is an alkyl group containing 1 to 6 carbon atoms, R' is an alkyl group containing 1 to 4 carbon atoms, m is 1, 2, or 3, k is 0, 1, or 2, and m+k is 1, 2, or 3; or its partial hydrolysate.
[9] The coating composition for car interior materials according to the above [8] wherein the functional group of the functional group-containing organosilicon compound is amino group.
[10] The coating composition for car interior materials according to any one of the above [4] to [9] wherein the functional group-containing organosilicon resin is the one obtained by reacting 0.5 to 50 parts by weight of the functional group-containing organosilicon compound with 100 parts by weight of the siloxane oligomer.
[11] The coating composition for car interior materials according to any one of the above [4] to [10] wherein, in the reaction between the siloxane oligomer and the functional group-containing organosilicon compound, 0.1 to 10 parts by weight of inorganic oxide fine paraticles and/or 0.1 to 20 parts by weight of a bis(alkoxysilyl) group-containing compound or its hydrolysate is added per 100 parts by weight of the siloxane oligomer.
[12] The coating composition for car interior materials according to any one of the above [4] to [11] wherein the functional group-containing organosilicon resin is the one obtained by reacting the siloxane oligomer and the functional group-containing organosilicon compound at 60 to 100°C for 1 to 3 hours.
[13] The coating composition for car interior materials according to any one of the above [1] to [12] wherein the functional group-containing organosilicon resin is the one having a weight average molecular weight of 500 to 5,000.
[14] The coating composition for car interior materials according to any one of the above [1] to [13] wherein the non-halogen flame retardant comprising particles of a compound composed of a nitrogen-containing heterocycle compound and a phosphate coated on their surface with a functional group-containing organosilicon resin has an average particle diameter or 1 to 30 µm.
[15] A car interior material having coated thereon the coating composition of any one of the above [1] to [14].

The coating composition for a car interior material of the present invention is a coating composition containing a novel non-halogen flame retardant which has physical properties comparable to those of the conventional coating agents containing a halogen flame retardant, and this coating composition is particularly effective for use in preparing car interior materials such as car seat, car mat, and ceiling material.

### DETAILED DESCRIPTION OF THE INVENTION

The coating composition for a car interior material of the present invention comprises a synthetic resin emulsion prepared by adding 1 to 300 parts by weight of at least one non-halogen flame retardant to 100 parts by weight of the solid content of the synthetic resin emulsion, wherein the non-halogen flame retardant comprises particles of a compound composed of a nitrogen-containing heterocycle compound and a phosphate coated on their surface with a functional group-containing organosilicon resin.

Examples of the synthetic resin emulsion which may be used in the present invention include emulsions such as vinyl chloride resin emulsion, (meth)acrylate resin emulsion, styrene-acrylate copolymer emulsion, urethane resin emulsion, silicone resin emulsion, fluororesin emulsion, epoxy resin emulsion, ethylene-vinyl acetate copolymer emulsion, and emulsion of a rubber such as SBR or NBR emulsion, which may be used alone or in combination of two or more. Preferred emulsions are (meth)acrylate resin emulsion, styrene-acrylate copolymer emulsion, urethane resin emulsion, ethylene-vinyl acetate copolymer emulsion, and emulsion of a rubber such as SBR or NBR emulsion. In the present invention, a (meth)acrylate resin means an acrylate resin or a methacrylate resin.

The synthetic resin emulsion as described above may be the one synthesized by emulsion polymerization or a commercially available synthetic resin emulsion.

Non-limiting examples of the commercially available synthetic resin emulsion include (meth)acrylate resin emulsions such as Vinyblan 2598 manufactured by Nissin Chemical Industry Co., Ltd. and Aron A-104 manufactured by Toagosei Co., Ltd., styrene-acrylate copolymer emulsions such as Vinybran 2590 manufactured by Nisshin Chemical Industry Co., Ltd. and Movinyl 975A manufactured by Clariant Polymer Co., Ltd., urethane resin emulsions such as Hydran HW-311 and HW-301 manufactured by Dainippon Ink & Chemicals, Inc. and Permarine UA-150 manufactured by Sanyo Chemical Industry Co., Ltd., ethylene-vinyl acetate copolymer emulsions such as Sumikaflex 400 and 752 manufactured by Sumitomo Chemical Co., Ltd., and Panflex OM-4000 by Kurare Co., Ltd., and rubber base emulsions such as Nalstar SR-100 and SR-112 manufactured by Nippon A&L Inc. and Nipol 1561 manufactured by Nippon Zeon Co., Ltd.

When the foregoing synthetic resin emulsions are prepared by emulsion polymerization, radical polymerization is generally employed for synthesis. The starting monomer used may be a monomer containing an unsaturated group having a radical polymerization ability.

Exemplary such monomers containing an unsaturated group include ethylene, propylene; chlorine-containing monomers such as vinyl chloride and vinylidene chloride; vinyl carboxylate monomers such as vinyl acetate and vinyl propionate; aromatic vinyl monomers such as styrene and α-methylstyrene; conjugated diene monomers such as 1,3-butadiene and 2-methyl-1,3-butadiene; ethylenically unsaturated monocarboxylate esters such as methyl acrylate, ethyl acrylate, butyl acrylate, 2-ethylhexyl acrylate, and methyl methacrylate; ethylenically unsaturated dicarboxylate esters such as dimethyl itaconate, diethyl maleate, monobutyl maleate, monoethyl fumarate, and dibutyl fumarate; ethylenically unsaturated monocarboxylic acids such as acrylic acid, methacrylic acid, and crotonic acid; ethylenically unsaturated dicarboxylic acids such as itaconic acid, maleic acid, and fumaric acid; epoxy group-containing monomers such as glycidyl methacrylate; alcohol group-containing monomers such as 2-hydroxyethyl methacrylate; alkoxyl group-containing monomers such as methoxyethyl acrylate; nitrile group-containing monomers such as acrylonitrile; amide group-containing monomer such as acrylamide; amino group-containing monomer such as dimethylaminoethyl methacrylate; and a monomer containing two or more ethylenically unsaturated groups such as divinylbenzene and allylmethacrylate.

The emulsion polymerization may be accomplished by any emulsion polymerization method known in the art. The monomer and other polymerization aids (for example, an emulsifying agent such as alkyl sulfate ester salt, a polymerization initiator such as ammonium sulfate, chain transfer agents such as mercaptans, a pH adjusting agent such as sodium carbonate, and various antifoaming agents) may be added at once at the initial stage of the reaction; continuously over the course of the reaction; or in divided portions during the polymerization.

The emulsifying agent which may be used in such emulsion polymerization include the surfactants as described in the following (1) to (4), and such surfactant may be used either alone or in combination of two or more.
(1) Anionic surfactant
   Surfactants such as alkyl sulfate ester salt, polyoxyethylene alkyl ether sulfate ester salt, alkyl benzene sulfonate, alkyl diphenyl ether disulfonate, alkyl naphthalene sulfonate, fatty acid salt, dialkyl sulfosuccinates salt, alkyl phosphate ester salt, and polyoxyethylene alkylphenyl phosphate ester salt.
(2) Nonionic surfactant
   Surfactant such as polyoxyethylene alkylphenyl ether, polyoxyethylene alkyl ether, polyoxyethylene fatty ester, sorbitan fatty acid ester, polyoxyethylene sorbitan fatty acid ester, polyoxyalkylene alkyl ether, polyoxyethylene derivative, glycerin fatty acid ester, polyoxyethylene hydrogenated castor oil, polyoxyethylene alkylamine, alkylalkanol amide, or acetylene alcohol, acetylene glycol, and their ethylene oxide adduct.
(3) Cationic surfactant
   Surfactant such as alkyltrimethyl ammonium chloride, dialkyl dimethyl ammonium chloride, alkyl benzyl ammonium chloride, and alkylamine salt.
(4) Polymerizable surfactant having a radically polymerizable double bond in its molecule
   Surfactant such as alkylallyl sulfosuccinate salt, methacryloyl polyoxyalkylene sulfate salt, and polyoxyethylene nonylpropenylphenyl ether sulfate salt.

Such surfactant may be used in an amount of 0.3 to 20 parts by weight, and preferably at 0.5 to 10 parts by weight per the monomer as described above.

The polymerization initiator used in such emulsion polymerization include persulfates such as ammonium persulfate and potassium persulfate; azo compounds such as 2,2'-diamidino-2,2'-azopropane dihydrochloride and azobisisobutyronitrile; and peroxides such as cumene hydroperoxide, benzoyl peroxide, and hydrogen peroxide. The polymerization initiator used may also be a known redox initiator, for example, potassium persulfuric and sodium hydrogen sulfite. Such polymerization initiator may be used at an amount of 0.1 to 5 parts by weight, and preferably at 0.2 to 2 parts by weight per the monomer as described above.

The temperature used for the emulsion polymerization is generally 10 to 90°C, and preferably 50 to 80°C. The time used for the polymerization is 3 to 20 hours. The polymerization is preferably conducted in an inert atmosphere such as nitrogen gas.

The synthetic resin emulsion used in the present invention preferably has a solid content of approximately 40 to 60% by weight.

The flame retardant used in the coating composition of the present invention is a non-halogen flame retardant comprising paraticles of a compound composed of a nitrogen-containing heterocycle compound and a phosphate having their surface coated with a functional group-containing organosilicon resin. Either single flame retardant or a combination of two or more flame retardants may be used in the present invention.

Examples of the compound composed of a nitrogen-containing heterocycle compound and a phosphate include melamine phosphate, melamine polyphosphate, melamine pyrophosphate, melam polyphosphate, and melem polyphosphate, which may be used alone or in combination of two or more. Commercially available products may also be used, and exemplary such commercial products include PHOSMEL-100 (product name, manufactured by Nissan Chemical Industries, LTD.), PHOSMEL-200 (product name, manufactured by Nissan Chemical Industries, LTD.), MPP-B (product name, manufactured by Sanwa Chemical Co., Ltd.), BUDIT3141 (product name, manufactured by BUDENHEIM), Planelon NP (product name, manufactured by Mitsui Fine Chemicals, Inc.), and MELAPUR200 (manufactured by Ciba).

The particles of a compound composed of a nitrogen-containing heterocycle compound and a phosphate are in the form of particles, preferably having an average particle size of 1 to 25 µm, especially 2 to 18 µm. It is noted that the average particle size is determined in the present invention as a weight average value or median diameter, for example, using a particle size distribution analyzer relying on the laser light diffraction technique.

When surface of the particles of the compound composed of a nitrogen-containing heterocycle compound and a phosphate are coated with a functional group-containing organosilicon resin, the functional groups first adsorb and orient to the surfaces of the particles of the compound composed of a nitrogen-containing heterocycle compound and a phosphate so that alkyl groups in the resin are likely to orient to the surfaces, exerting good water repellency. No particular limit is imposed on the method of preparing the functional group-containing organosilicon resin. However, it is preferred that the functional group-containing organosilicon resin be the reaction product of a siloxane oligomer with a functional group-containing organosilicon compound because it has an increased weight average molecular weight and is effective for preventing any lowering of water solubility (or water repellency).

The siloxane oligomer is preferably at least one alkoxysilane represented by the following formula:

RₙSi(OR')₄₋ₙ

wherein R is an alkyl group containing 1 to 6 carbon atoms, R' is an alkyl group containing 1 to 4 carbon atoms, and n is an integer of 0 to 3.

In the above formula, exemplary alkyl groups containing 1 to 6 carbon atoms for the R include methyl group, ethyl group, propyl group, butyl group, pentyl group, and hexyl group, and exemplary alkyl group containing 1 to 4 carbon atoms for R' include methyl group, ethyl group, propyl group, and butyl group.

The siloxane oligomer is preferably a partial hydrolytic condensate of an alkoxysilane containing at least 50% by weight, and more preferably at least 70% by weight of a trialkoxysilane (n=1), typically methyltrimethoxysilane, methyltriethoxysilane, or ethyltriethoxysilane, the condensate preferably containing at least one, and in particular, at least two alkoxy groups. In the siloxane oligomer, the number of silicon atoms is preferably 2 to 10 on the average, and in particular, 2 to 4 on the average. An alternative siloxane oligomer may be obtained by reacting an alkyltrialkoxysilane containing 1 to 6 carbon atoms with methanol or ethanol. In this case, the number of silicon atoms is preferably 2 to 6 on the average, and in particular, 2 to 4 on the average. This alternative siloxane oligomer should also preferably have at least one, and in particular, at least two alkoxy groups.

The functional group-containing organosilicon compound is preferably a functional group-containing alkoxysilane represented by the following formula:

XₘR_{K}Si(OR')₄₋ₘ₋ₖ

wherein X is an alkyl group having a functional group selected from epoxy group, vinyl group, mercapto group, and amino group (and preferably an alkyl group containing 1 to 6 carbon atoms), m is 1, 2, or 3, and preferably 1, k is 0, 1, or 2, and preferably 0 or 1, m+k is 1, 2, or 3, and preferably 1 or 2, R and R' are as defined above; or its partial hydrolysate.

In the above formula, typical examples are the same for R and R', and X is an alkyl group (preferably an alkyl group containing 1 to 6 carbon atoms) having a functional group selected from epoxy group, vinyl group, mercapto group, and amino group, and examples include aminoethyl group, aminopropyl group, glycidoxypropyl group, methacryloxypropyl group, and mercaptopropyl group.

As described above, the functional group of the functional group-containing organosilicon compound may be epoxy group, vinyl group, mercapto group, or amino group. However, for use as a dispersion in water, the functional group is preferably amino group.

The amino group-containing organosilicon compound may be an amino group-containing alkoxysilane or its partial hydrolysate, and examples include
N-(2-aminoethyl)-3-aminopropyltrimethoxysilane,
N-(2-aminoethyl)3-aminopropylmethyldimethoxysilane,
N-(2-aminoethyl)-3-aminopropyltriethoxysilane,
3-aminopropyltrimethoxysilane, and
3-aminopropylmethyldimethoxysilane as well as their partial hydrolysates.

The functional group-containing organosilicon compound is preferably incorporated in an amount of 0.5 to 50 parts by weight, and more preferably, 5 to 30 parts by weight per 100 parts by weight of the siloxane oligomer. When an insufficient amount of the functional group-containing organosilicon compound is incorporated, the silicone water repellent may become unstable, while excessive incorporation may invite severe yellowing.

In the reaction of the siloxane oligomer with the functional group-containing organosilicon compound, 0.1 to 10 parts by weight of an inorganic oxide fine paraticles such as colloidal silica or 0.1 to 20 parts by weight of bis(alkoxysilyl) group-containing compound or its partial hydrolysate may be added per 100 parts by weight of the siloxane oligomer.

The reaction between the siloxane oligomer and the functional group-containing organosilicon compound may be accomplished by a method known in the art. The solvent is preferably an alcohol solvent, and in particular, methanol, ethanol, isopropyl alcohol, and tertiary butyl alcohol. The catalyst used is preferably water, an organic acid, or an inorganic acid, and examples used include at least one acid selected from hydrochloric acid, sulfuric acid, nitric acid, methanesulfonic acid, formic acid, acetic acid, propionic acid, citric acid, oxalic acid, and maleic acid. The preferred are acetic acid and propionic acid. The silicone oligomer may be hydrolyzed at a reaction temperature 10 to 40°C, and in particular, 20 to 30°C for 1 to 3 hours. Next, the reaction product and the functional group-containing organosilicon compound are preferably reacted under the conditions such that the reaction proceeds at a temperature of 60 to 100°C for a reaction time of 1 to 3 hours. After the completion of the reaction, the solvent is heated to a temperature above the boiling point of the solvent to thereby remove the solvent such as the alcohol solvent by distillation. In this case, the solvent is preferably distilled off to the level of up to 30% by weight, and in particular, up to 10% by weight based on all solvents such as alcohol (the alcohol used for the reaction solvent and the alcohol generated as a byproduct).

The functional group-containing organosilicon resin obtained by the reaction preferably has a weight average molecular weight as measured by GPC in term of polystyrene (Mw)of 500 to 5,000, and more preferably, 800 to 2,000.

An appropriate amount of the functional group-containing organosilicon resin that covers surfaces of the particles of the compound composed of a nitrogen-containing heterocycle compound and a phosphate is 0.1 to 50 parts by weight, and in particular, 3 to 10 parts by weight per 100 parts by weight of the compound composed of a nitrogen-containing heterocycle compound and a phosphate. Excessively low amount of the resin may lead to poor water resistance or water repellency whereas use of too much resin may be economically disadvantageous.

The method used for coating the particles of the compound composed of a nitrogen-containing heterocycle compound and a phosphate with the functional group-containing organosilicon resin may be a method known in the art such as coacervation, drying in liquid, hotmelt microencapsulation, spray drying, or curing in liquid.

The thus obtained non-halogen flame retardant comprising particles of the compound composed of a nitrogen-containing heterocycle compound and a phosphate coated with a functional group-containing organosilicon resin may have an average particle diameter of 1 to 30 µm, and in particular, 2 to 20 µm, and at least one of such non-halogen flame retardant may be used in the present invention.

In the coating composition for a car interior material, the synthetic resin emulsion and the non-halogen flame retardant comprising particles of the compound composed of a nitrogen-containing heterocycle compound and a phosphate coated on their surface with a functional group-containing organosilicon resin are mixed in such a proportion that 1 to 300 parts by weight, and preferably 5 to 200 parts by weight of the non-halogen flame retardant is present per 100 parts by weight of the solid content of the synthetic resin emulsion. Use of the flame retardant at an amount of less than 1 part by weight results in an insufficient flame retardant effect whereas use of more than 300 parts by weight fails to provide a coating with a practical strength and increases the cost.

In addition to the above-mentioned components, the coating composition for car interior materials according to the present invention may contain additives, for example, water-soluble cellulose polymers such as hydroxymethyl cellulose, hydroxyethyl cellulose, carboxymethyl cellulose and methyl cellulose; synthetic water-soluble polymers such as fully saponified polyvinyl alcohol, partially saponified polyvinyl alcohol, polyacrylic acid and salts thereof, polymethacrylic acid and salts thereof, polyacrylamide, and alkali viscosity buildup type acrylic emulsions; bases such as ammonia, triethylamine, and sodium hydroxide; polyethylene wax, anti-foaming agents, leveling agents, tackifiers, preservatives, anti-bacterial agents, and anti-rusting agents as long as they do not compromise the objects of the invention.

The coating composition for car interior materials of the present invention is prepared by intimately mixing predetermined amounts of the foregoing components in a conventional manner. The coating composition thus obtained should preferably have a solids content of 30 to 70% by weight, and more preferably 40 to 60% by weight.

In applying the coating composition for car interior materials of the present invention to substrates, any of well-known applicators, such as gravure roll coaters, knife coaters, and reverse roll coaters may be used. The substrates which may be used in the present invention include woven and knitted fabrics of polyester, nylon or the like and non-wovens of polyester, polypropylene or the like.

In applying the coating composition for car interior materials to substrates, the composition may be used as such or after thickening with commercially available thickeners such as alkali viscosity buildup type acrylic emulsions. On use, the coating composition is preferably adjusted to a viscosity of 10,000 to 50,000 mPa·s at 25°C, more preferably 20,000 to 40,000 mPa·s at 25°C, as measured by a Brookfield viscometer.

The coating weight of the coating composition for car materials is generally 30 to 600 g/m², and preferably 50 to 500 g/m² after drying. After the coating, the coating is preferably dried at a temperature of about 100 to 180°C for about 1 to 10 minutes.

The major requirements for car interior materials such as car seats, car mats and ceiling materials are not only flame resistance but also texture. The texture is measured by the 45° cantilever method of JIS L1079 as the evaluation of "softness". The performance requirement for "softness" varies depending on the type of the car interior materials. For car seats and the like, soft texture is required and "softness" according to the 45° cantilever method of JIS L1079 is preferably up to 100. On the other hand, for car mats, ceiling materials, and the like, hard texture is required and "softness" according to the 45° cantilever method of JIS L1079 is preferably in excess of 100. To this end, the coating weight of the coating agent is desirably 30 to 200 g/m² after drying for car seats and the like. The coating weight of the coating composition is desirably 300 to 600 g/m² after drying for car mats, ceiling materials, and the like.

### EXAMPLES

Next, the present invention is described in further detail by the following Preparation Examples, Examples, and the Comparative Examples, which by no means limit the scope of the present invention. In the following Examples, parts and % designate parts by weight and % by weight, respectively, and the average particle size is the value measured by using a laser scattering granular variation counter.

### Preparation Example 1

A 3-L glass container equipped with a stirrer, a reflux condenser, and a thermometer was thoroughly purged of air with nitrogen. To the glass container were added 1,000 parts of deionized water, 20 parts of Emal O (sodium laurylsulfate manufactured by Kao Co., Ltd.), and 30 parts of DKSNL-600 (polyoxyethylene lauryl ether manufactured by Daiichi Kogyo Seiyaku Co., Ltd.), and stirring was started.

The internal temperature of the container was raised to 80°C, whereupon a mixture of 580 parts of butyl acrylate, 300 parts of ethyl acrylate, 100 parts of acrylonitrile, and 20 parts of acrylic acid was continuously fed over 4 hours, and then, a mixture of 4 parts of ammonium persulfate and 50 parts of water was continuously fed over 4 hours. Thereafter, the reaction was allowed to proceed at 80°C for one hour. The reaction solution was then cooled to 30°C, yielding an acrylate resin emulsion having a solids content of 49.5%.

### Preparation Examples 2 to 4

Emulsions were obtained by repeating the emulsion polymerization procedure of Preparation Example 1.

Composition of the emulsions of Preparation Examples 1 to 4 and commercial synthetic resin emulsions is shown in Table 1.

**Table 1: Resin emulsions**

| Composition (Solid content, %) | St | MMA | BA | EA | AN | AA | GMA | Solid content in the emulsion (%) |
|---|---|---|---|---|---|---|---|---|
| Preparation Example 1 | | | 58 | 30 | 10 | 2 | | 49.5 |
| Preparation Example 2 | | 20 | 72 | | | 5 | 3 | 50.3 |
| Preparation Example 3 | 80 | | 18 | | | 2 | | 50.5 |
| Preparation Example 4 | | 65 | | 32 | | 3 | | 49.8 |
| Hydran HW-301 | Urethane resin emulsion manufactured by Dainippon Ink & Chemicals, Inc. | | | | | | | 45 |
| Sumikaflex 752 | Ethylene - vinyl acetate resin emulsion manufactured by Sumitomo Chemical Co., Ltd. | | | | | | | 50 |
| Nalstar SR-112 | SBR emulsion manufacture by Nippon A&L Inc. | | | | | | | 50 |

| | | | | | | | | |
|---|---|---|---|---|---|---|---|---|
| Note: St: styrene MMA: methyl methacrylate ester BA: butyl acrylate ester EA: ethyl acrylate ester AN: acrylonitrile AA: acrylic acid GMA: glycidyl methacrylate ester | | | | | | | | |

### Preparation Example 5

A 500 ml glass container equipped with a stirrer, a reflux condenser, and a thermometer was charged with 85 g (0.37 mol calculated as dimer) of methyltrimethoxysilane oligomer, 154 g of methanol, and 5.1 g of acetic acid. With stirring, 6.8 g (0.37 mol) of deionized water was added, followed by 2 hours of stirring at 25°C. Then 17.7 g (0.08 mol) of 3-aminopropyltrimethoxysilane was added dropwise.

Thereafter, the mixture was heated to the reflux temperature of methanol (64°C), at which reaction was allowed to proceed for one hour. Using an ester adapter, the alcohol was distilled off until the internal temperature reached 110°C. There was obtained 81 g of a pale yellow clear solution containing a silicon resin having a Mw of 1,100 as measured by GPC.

To 100 parts of melamine phosphate (N content, 35%; average particle diameter, 10 µm) were added 10 parts of the above reaction solution and 100 parts of ethanol. The mixture was stirred for 30 minutes, and the ethanol was removed under reduced pressure. The residue was ground on a grinder, yielding amino group-containing silicon resin-treated melamine polyphosphate having an average particle size of 12 µm.

### Preparation Example 6

A 500 ml glass container equipped with a stirrer, a reflux condenser, and a thermometer was charged with 199 g (0.88 mol calculated as dimer) of methyltrimethoxysilane oligomer, 120 g of methanol, and 11.8 g of acetic acid. With stirring, 19.8 g (0.88 mol of water) of colloidal silica Snowtex O (manufactured by Nissan Chemical Co., Ltd.) was added, followed by 2 hours of stirring at 25°C. Then 38.9 g (0.18 mol) of 3-aminopropyltrimethoxysilane was added dropwise.

Thereafter, the mixture was heated to 64°C, and the reaction was allowed to proceed for one hour. Using an ester adapter, the alcohol was distilled off until the internal temperature reached 110°C. There was obtained 209 g of a pale yellow clear solution of silicon resin having a Mw of 1,000 as measured by GPC.

To 100 parts of melamine polyphosphate, melam polyphosphate, and melem polyphosphate double salt (P content, 11%; average particle diameter, 2.5 µm) were added 5 parts of the above reaction solution and 100 parts of ethanol. The mixture was stirred for 30 minutes, and the ethanol was removed under reduced pressure. The residue was ground on a grinder, yielding amino group-containing silicon resin-treated melamine polyphosphate, melam polyphosphate, and melem polyphosphate double salt having an average particle size of 4 µm.

### Preparation Example 7

A 500 ml glass container equipped with a stirrer, a reflux condenser, and a thermometer was charged with 85 g (0.37 mol calculated as dimer) of methyltrimethoxysilane oligomer, 154 g of methanol, and 5.1 g of acetic acid. With stirring, 6.8 g (0.37 mol) of deionized water was added, followed by 2 hours of stirring at 25°C. Then, 15.7 g (0.08 mol) of 3-mercaptopropyltrimethoxysilane was added dropwise.

Thereafter, the mixture was heated to 64°C, and the reaction was allowed to proceed for one hour. Using an ester adapter, the alcohol was distilled off until the internal temperature reached 110°C. There was obtained 81 g of a pale yellow clear solution of silicon resin having a Mw of 1,050 as measured by GPC.

To 100 parts of melamine phosphate (N content, 35%; average particle diameter, 10 µm) were added 10 parts of the above reaction solution and 100 parts of ethanol. The mixture was stirred for 30 minutes, and the ethanol was removed under reduced pressure. The residue was ground on a grinder, yielding mercapto group-containing silicon resin-treated melamine polyphosphate having an average particle size of 12 µm.

### Preparation Example 8

To 100 parts of melamine polyphosphate (N content, 35%, average particle diameter 10 µm) were added 5 parts of a linear silicone oil KF-96H (manufactured by Shin-Etsu Chemical Co., Ltd.) and 100 parts of toluene. The mixture was stirred for 30 minutes, and the toluene was removed under reduced pressure. The residue was ground on a grinder, yielding silicone-treated melamine polyphosphate having an average particle size of 12 µm.

### Preparation Example 9

A 500 ml glass container equipped with a stirrer, a reflux condenser, and thermometer was charged with 85 g (0.37 mol calculated as dimer) of methyltrimethoxysilane oligomer, 154 g of methanol, and 5.1 g of acetic acid. With stirring, 6.8 g (0.37 mol) of deionized water was added, followed by 2 hours of stirring at 25°C. Then 17.7 g (0.08 mol) of 3-aminopropyltrimethoxysilane was added dropwise.

Thereafter, the mixture was heated to 64°C, and the reaction was allowed to proceed for one hour. Using an ester adapter, the alcohol was distilled off until the internal temperature reached 110°C. There was obtained 81 g of a pale yellow clear solution containing a silicon resin having a Mw of 1,100 as measured by GPC.

To 100 parts of ammonium polyphosphate (FR CROS S 10 manufactured by BUDENHEIM; average particle diameter, 8 µm) were added 10 parts of the above reaction solution and 100 parts of ethanol. The mixture was stirred for 30 minutes, and the ethanol was removed under reduced pressure. The residue was ground on a grinder, yielding amino group-containing silicon resin-treated melamine polyphosphate having an average particle size of 10 µm.

### Examples 1 to 9 and Comparative Examples 1 to 10

To a stainless steel container was added 100 parts of each of the emulsions of Preparation Examples 1 to 4 or a commercial emulsion, and stirring was started. With stirring continued, a predetermined amount of a dispersion (solid content, 60%) of each of the treated ammonium polyphosphates of Preparation Examples 5 to 9 or commercial ammonium polyphosphate in water prepared with the aid of a surfactant Latemul ASK (by Kao Corp.) was added, followed by one hour of stirring. Thereafter, deionized water was added to adjust the solid content to 50±1%. Then a thickener Boncoat V (by Dainippon Ink & Chemicals, Inc., alkali viscosity buildup type acrylic emulsion) and 25% aqueous ammonia were added to the dispersion for thickening to thereby yield a coating agent having an increased viscosity of 30,000±3,000 mPa·s at 25°C as measured by a Brookfield viscometer.

Formulation of the coating agent is shown in Tables 2 and 3.

**Table 2: Coating agent (for car seat)**

| Composition (Solid content, parts) | Example | | | | Comparative Example | | | | | |
|---|---|---|---|---|---|---|---|---|---|---|
| | 1 | 2 | 3 | 4 | 1 | 2 | 3 | 4 | 5 | 6 |
| Preparation Example 1 | 100 | | | 100 | 100 | | 100 | 100 | | 100 |
| Preparation Example 2 | | 100 | | | | 100 | | | 100 | |
| HW-301 | | | 100 | | | | | | | |
| Preparation Example 5 | 150 | | 90 | | | | | 0.5 | | |
| Preparation Example 6 | | 150 | 50 | | | | | | 400 | |
| Preparation Example 7 | | | | 150 | | | | | | |
| Preparation Example 8 | | | | | 150 | | | | | |
| Preparation Example 9 | | | | | | | | | | 150 |
| Terrages C-30 | | | | | | 100 | | | | |
| Terrages C-60 | | | | | | | 100 | | | |

| | | | | | | | | | | |
|---|---|---|---|---|---|---|---|---|---|---|
| Note: Terrages C-30: melamine-coated ammonium polyphosphate manufactured by Chisso Corp. Terrages C-60: melamine/formaldehyde-coated ammonium polyphosphate manufactured by Chisso Corp. | | | | | | | | | | |

**Table 3: Coating agent (for car mat)**

| Composition (Solid content, parts) | Example | | | | | Comparative Example | | | |
|---|---|---|---|---|---|---|---|---|---|
| | 5 | 6 | 7 | 8 | 9 | 7 | 8 | 9 | 10 |
| Preparation Example 3 | 100 | | 50 | | 100 | 100 | | 100 | 100 |
| Preparation Example 4 | | 100 | | | | | 100 | | |
| Sumikaflex 752 | | | 50 | | | | | | |
| SR-112 | | | | 100 | | | | | |
| Preparation Example 5 | 10 | | 8 | 10 | | | | | |
| Preparation Example 6 | | 15 | | 7 | | | | 0.5 | |
| Preparation Example 7 | | | | | 10 | | | | |
| Preparation Example 9 | | | | | | | | | 15 |
| Terrages C-30 | | | | | | 10 | | | |
| Terrages C-60 | | | | | | | 15 | | |

A predetermined amount of each coating agent was applied to a polyester woven fabric with a weight of 400 g/m² and a polypropylene non-woven fabric with a weight of 700 g/m², and dried at 130°C for 5 minutes for use as samples.

The samples obtained in Examples and Comparative Examples were evaluated for their sew line fatigue, flame retardancy, water resistance, softness, formaldehyde emission, heat resistance, and warm water resistance. The sample of polyester woven fabric with a weight of 400 g/m² was used for a car seat and evaluated for sew line fatigue, flame retardancy, water resistance, softness, formaldehyde emission, heat resistance, and warm water resistance with the results shown in Table 4. The sample of polypropylene non-woven fabric with a weight of 700 g/m² was used for a car mat and examined for flame retardancy, water resistance, softness, formaldehyde emission, heat resistance, and warm water resistance, with the results shown in Table 5.

The test methods and evaluation criteria are described below.

### 1. Sew line fatigue

Two pairs of test pieces each having a size of 10 cm wide and 10 cm long were cut out in warp and weft directions. To the back surface of each test piece, a urethane foam slab (density 0.02 g/cm³, thickness 5 mm) and a backing fabric (nylon spun-bonded non-woven fabric, 40 g/m²) of the same size were laid to form a laminate. Two laminates were laid with their front surfaces mated each other. Using a sewing machine, the assembly was sewed at 1 cm inside from the side edge. In this way, two sets of specimens were prepared with the sew line extending in each of warp and weft directions. The specimen was mounted on a sew line fatigue testing machine (Yamaguchi Chemical Industry Co., Ltd.) which was operated under a load of 3 kg over 2,500 cycles. With the load of 3 kg kept applied, the sew line fatigue of the specimen was observed through a scale magnifier.

The term "sew line fatigue" refers to the distance between the sewing thread moved in the loading direction by repeated fatigue and the thread within fabric located nearest thereto, measured in unit 0.1 mm. An average of measurements at two locations was used as the sew line fatigue of the test specimen.
Criteria:
○: Moving distance of up to 2.2 mm
×: Moving distance in excess of 2.2 mm

### 2. Flame retardancy

Flame retardancy was evaluated by the test method of US Federal Motor Vehicle Safety Standard FMVS S-302.
Criteria:
(1) Car seat
   ○: Combustion distance of up to 38 mm
   ×: Combustion distance exceeding 38 mm
(2) Car mat
   ○: Combustion distance of up to 38 mm and combustion time of up to 60 seconds or combustion rate of up to 10 cm/min
   ×: Combustion distance in excess of 38 mm and combustion time of in excess of 60 seconds or combustion rate of in excess of 10 cm/min

### 3. Water resistance

A water droplet having a diameter of 5 mm was dropped on the surface coated with the coating agent. The surface was evaluated for the sliminess.
Criteria:
⊚: Not slimy. Water droplet was not soaked into the coated surface
○: Not slimy
Δ: Somewhat slimy
×: Heavily slimy

### 4. Softness

Softness was evaluated by the 45° cantilever method of JIS L1079 (5.17A method). The sample is felt harder at higher softness.
Criteria:
(1) Car seat
   ○: Softness of up to 100
   ×: Softness exceeding 100
(2) Car mat
   ○: Softness exceeding 100
   ×: Softness of up to 100

### 5. Measurement of formaldehyde

A 2L Tedlar (Trademark) bag (available for DuPont) was charged with 50 cm² of the sample, purged with nitrogen and sealed. The Tedlar bag was allowed to stand in an atmosphere of 65°C for 2 hours. Formaldehyde in the bag was then detected by using a Gas Detector 91L (Gas Tech Co., Ltd.).
Criteria:
○: No emission of formaldehyde
×: Formaldehyde detected

### 6. Heat resistance

Polyester woven fabrics and polypropylene non-woven fabrics each having various coating agents coated thereon were heat treated at a temperature 180°C for 30 minutes. Change in color of the coating surface was evaluated by visual inspection.
A: Slight yellowing
B: Some yellowing
C: Considerable yellowing

### 7. Warm water resistance

Polyester woven fabrics and polypropylene non-woven fabrics each having various coating agents coated thereon were immersed in warm water at a temperature of 60°C, and allowed to stand for 48 hours. Dissolution of phosphor element was measured before and after the immersion.

**Table 4: Test results (the composition for car seat)**

| | Example | | | | Comparative Example | | | | | |
|---|---|---|---|---|---|---|---|---|---|---|
| | 1 | 2 | 3 | 4 | 1 | 2 | 3 | 4 | 5 | 6 |
| Coating weight after drying (g/m²) | 140 | 120 | 100 | 110 | 100 | 110 | 160 | 140 | 110 | 120 |
| Sew line fatigue | ○ | ○ | ○ | ○ | ○ | ○ | ○ | ○ | × | ○ |
| Flame retardancy | ○ | ○ | ○ | ○ | ○ | ○ | ○ | × | ○ | ○ |
| Water resistance | ⊚ | ⊚ | ⊚ | ⊚ | Δ-× | Δ-× | ○ | ○ | ○ | ○ |
| Softness | ○ | ○ | ○ | ○ | ○ | ○ | ○ | ○ | ○ | ○ |
| Formaldehyde | ○ | ○ | ○ | ○ | ○ | ○ | × | ○ | ○ | ○ |
| Heat resistance | A | A | A | A | A | C | B | A | A | B |
| Warm water resistance (%) | ≤ 1 | ≤ 1 | ≤ 1 | ≤ 1 | 19 | 28 | 17 | ≤ 1 | ≤ 1 | 5 |

**Table 5: Test results (the composition for car mat)**

| | Example | | | | | Comparative Example | | | |
|---|---|---|---|---|---|---|---|---|---|
| | 5 | 6 | 7 | 8 | 9 | 7 | 8 | 9 | 10 |
| Coating weight after drying (g/m²) | 36 | 38 | 38 | 43 | 42 | 42 | 42 | 46 | 40 |
| Flame retardancy | ○ | ○ | ○ | ○ | ○ | ○ | ○ | × | ○ |
| Water resistance | ⊚ | ⊚ | ⊚ | ⊚ | ⊚ | Δ-× | ○ | ○ | ○ |
| Softness | ○ | ○ | ○ | ○ | ○ | ○ | ○ | ○ | ○ |
| Formaldehyde | ○ | ○ | ○ | ○ | ○ | ○ | × | ○ | ○ |
| Heat resistance | A | A | A | A | A | B | B | B | B |
| Warm water resistance (%) | ≤ 1 | ≤ 1 | ≤ 1 | ≤ 1 | ≤ 1 | 25 | 12 | ≤ 1 | 4 |

## Claims

1. A coating composition for car interior materials comprising a flame retardant product prepared by adding 1 to 300 parts by weight of at least one non-halogen flame retardant to 100 parts by weight of the solid content of a synthetic resin emulsion, wherein the non-halogen flame retardant comprises particles of a compound composed of a nitrogen-containing heterocycle compound and a phosphate coated on their surface with a functional group-containing organosilicon resin.

2. The coating composition for car interior materials according to claim 1 wherein the compound composed of a nitrogen-containing heterocycle compound and a phosphate is at least one member selected from the group consisting of melamine phosphate, melamine polyphosphate, melamine pyrophosphate, melam polyphosphate, and melem polyphosphate.

3. The coating composition for car interior materials according to claim 1 or 2 wherein the synthetic resin emulsion is at least one member selected from the group consisting of (meth)acrylate resin emulsion, styrene-acrylate copolymer emulsion, urethane resin emulsion, ethylene-vinyl acetate copolymer emulsion, and rubber emulsion.

4. The coating composition for car interior materials according to any one of claims 1 to 3 wherein the functional group-containing organosilicon resin is a resin obtained by reacting a siloxane oligomer with a functional group-containing organosilicon compound.

5. The coating composition for car interior materials according to claim 4 wherein the siloxane oligomer is at least one partial hydrolytic condensate of an alkoxysilane represented by the following formula:
RₙSi(OR')₄₋ₙ
wherein R is an alkyl group containing 1 to 6 carbon atoms, R' is an alkyl group containing 1 to 4 carbon atoms, and n is an integer of 0 to 3, the siloxane oligomer having at least one alkoxy group in the molecule and containing 2 to 10 silicon atoms on average.

6. The coating composition for car interior materials according to claim 5 wherein the alkoxysilane contains at least 50% by weight of a trialkoxysilane.

7. The coating composition for car interior materials according to claim 5 wherein the siloxane oligomer is a siloxane oligomer containing 2 to 6 silicon atoms on average obtained by reacting an alkyltrialkoxysilane containing 1 to 6 carbon atoms with methanol or ethanol.

8. The coating composition for car interior materials according to any one of claims 4 to 7 wherein the functional group-containing organosilicon compound is a functional group-containing alkoxysilane represented by the following formula:
XₘRₖSi(OR')₄₋ₘ₋ₖ
wherein X is an alkyl group having a functional group selected from epoxy group, vinyl group, mercapto group, and amino group, R is an alkyl group containing 1 to 6 carbon atoms, R' is an alkyl group containing 1 to 4 carbon atoms, m is 1, 2, or 3, k is 0, 1, or 2, and m+k is 1, 2, or 3; or its partial hydrolysate.

9. The coating composition for car interior materials according to claim 8 wherein the functional group of the functional group-containing organosilicon compound is amino group.

10. The coating composition for car interior materials according to any one of claims 4 to 9 wherein the functional group-containing organosilicon resin is the one obtained by reacting 0.5 to 50 parts by weight of the functional group-containing organosilicon compound with 100 parts by weight of the siloxane oligomer.

11. The coating composition for car interior materials according to any one of claims 4 to 10 wherein, in the reaction between the siloxane oligomer and the functional group-containing organosilicon compound, 0.1 to 10 parts by weight of inorganic oxide fine paraticles and/or 0.1 to 20 parts by weight of a bis(alkoxysilyl) group-containing compound or its hydrolysate is added per 100 parts by weight of the siloxane oligomer.

12. The coating composition for car interior materials according to any one of claims 4 to 11 wherein the functional group-containing organosilicon resin is the one obtained by reacting the siloxane oligomer and the functional group-containing organosilicon compound at 60 to 100°C for 1 to 3 hours.

13. The coating composition for car interior materials according to any one of claims 1 to 12 wherein the functional group-containing organosilicon resin is the one having a weight average molecular weight of 500 to 5,000.

14. The coating composition for car interior materials according to any one of claims 1 to 13 wherein the non-halogen flame retardant comprising particles of a compound composed of a nitrogen-containing heterocycle compound and a phosphate coated on their surface with a functional group-containing organosilicon resin has an average particle diameter or 1 to 30 µm.

15. A car interior material having coated thereon the coating composition of any one of claims 1 to 14.
